(19) Europäisches Patentamt
European Patent Office
Office européen des brevets

(11) **EP 3 097 622 B1**

(12) **EUROPÄISCHE PATENTSCHRIFT**

(45) Veröffentlichungstag und Bekanntmachung des Hinweises auf die Patenterteilung:
**08.04.2020   Patentblatt 2020/15**

(51) Int Cl.:
*F03D 7/04* (2006.01)   *H02J 3/38* (2006.01)
*G05F 1/66* (2006.01)   *F03D 7/02* (2006.01)

(21) Anmeldenummer: **15700262.7**

(22) Anmeldetag: **14.01.2015**

(86) Internationale Anmeldenummer:
**PCT/EP2015/050610**

(87) Internationale Veröffentlichungsnummer:
**WO 2015/110336 (30.07.2015 Gazette 2015/30)**

(54) **WINDPARKREGELUNG MIT VERBESSERTEM SOLLWERTSPRUNGVERHALTEN**

WIND FARM CONTROL HAVING  IMPROVED TARGET VALUE JUMP BEHAVIOR

RÉGULATION D'UN PARC ÉOLIEN AVEC COMPORTEMENT AMÉLIORÉ DE SAUT DE LA VALEUR DE CONSIGNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2014  DE 102014000790**

(43) Veröffentlichungstag der Anmeldung:
**30.11.2016   Patentblatt 2016/48**

(73) Patentinhaber: **Senvion GmbH**
**22297 Hamburg (DE)**

(72) Erfinder:
• **SCHRÖTER, Thomas**
**21073 Hamburg (DE)**
• **GEISLER, Jens**
**24768 Rendsburg (DE)**
• **OTT, Thomas**
**24784 Westerrönfeld (DE)**
• **BLUHM, Roman**
**22844 Norderstedt (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**EP-A1- 1 467 463         EP-A1- 1 467 463**
**EP-A2- 2 028 368         US-A1- 2011 166 717**
**US-A1- 2012 053 751**

• **BAYAT M ET AL: "Predictive control of wind energy conversion system", DEVELOPMENTS IN RENEWABLE ENERGY TECHNOLOGY ( ICDRET), 2009 1ST INTERNATIONAL CONFERENCE ON THE, IEEE, PISCATAWAY, NJ, USA, 17 December 2009 (2009-12-17), pages 1-5, XP032311589, DOI: 10.1109/ICDRET.2009.5454235 ISBN: 978-1-4244-6012-0**

**Beschreibung**

Die Erfindung betrifft einen Windpark mit mindestens zwei Windenergieanlagen, die jeweils eine Betriebsteuerung aufweisen, sowie einem Parkmaster zur Steuerung der Windenergieanlagen. An den Parkmaster ist ein Sollwertsignal für die Leistungsabgabe des Windparks angelegt, woraus er Sollsignale für die Leistungsabgaben der Windenergieanlagen generiert.

Durch zunehmenden Ausbau der Windenergieanlagen ist es erforderlich, dass auch Windparks an der Netzregelung teilnehmen. Dazu können die Windparks von den Netzbetreibern Sollwerte für die abzugebende Wirkleistung erhalten. So wird insbesondere bei Starkwindlagen die von den Windparks abgegebene Wirkleistung begrenzt, um eine Überlastung des Netzes oder ein unerwünschtes Ansteigen der Netzfrequenz, was wiederum zu weiteren Netzfehlern führen könnte, zu verhindern. Derartige einem Windpark vorgegebene Sollwerte sind nicht statisch, sondern können sich abhängig von Betriebsbedingungen ändern. Dabei können sich Änderungen sowohl nach unten zu kleineren Leistungen wie auch nach oben zu größeren Leistungen ergeben. Die Sollwerte sind angelegt an einen Parkmaster des Windparks. Der Parkmaster enthält eine Regelung der von dem Windpark abgegebenen Leistung in der Weise, dass er auf die von den einzelnen Windenergieanlagen abgegebene Wirkleistung einwirkt. Dazu gibt der Parkmaster entsprechende Sollwertsignale an die Windenergieanlagen aus.

Es sind diesbezüglich zwei verschiedene Ausprägungen für die Parkmaster bekannt geworden. Bei der ersten Ausprägung gibt der Parkmaster bei einer Sollwertänderung einen neuen einheitlichen Sollwert an die Windenergieanlagen aus. Der einheitliche Sollwert für die Windenergieanlagen bietet den Vorteil einer einfachen Berechnung. Dies wird jedoch erkauft damit, dass nicht die Betriebszustände der einzelnen Windenergieanlagen hierbei berücksichtigt werden können. Daher muss die Regelung des Parkmasters recht langsam agieren, insbesondere um bei Leistungsreduktionen der Gefahr von Unterschwingern (die zu erheblichen Ertragseinbußen führen können) zu begegnen. Eine derart träge Regelung ist jedoch praktisch nachteilig. Bei der anderen Ausprägung gibt der Parkmaster individuelle Sollwerte an die einzelnen Windenergieanlagen aus. Dies geschieht unter Berücksichtigung der verfügbaren Leistung der jeweiligen einzelnen Windenergieanlage. Ein solches Konzept ist aus der EP 2 028 368 A2 bekannt (die zweiteilige Form der Ansprüche 1 und 12 basiert auf diesem Dokument). Der Vorteil ist eine präzisere Anpassung an die jeweiligen Verhältnisse der einzelnen Windenergieanlagen. Dem steht jedoch als Nachteil die große Abhängigkeit von der Genauigkeit der Ermittelbarkeit der verfügbaren Leistungen gegenüber. Ein weiterer Nachteil ist, dass dieses Konzept ausgesprochen aufwändig ist und viel Datenverkehr in Signalnetzen des Windparks erzeugt. Wegen dieser hohen Datenverkehrsanforderungen, die nicht immer in Echtzeit erfüllt werden können, ist dieses Konzept daher in der Praxis nicht sehr störungsfest. US2012/0053751 A1 beschreibt einen Windpark und einen "Parkmaster" mit einem Leistungsregler, der eine prädiktive Steuerung ("Model Predictive Control") vorsieht.

Der Erfindung liegt die Aufgabe zugrunde, eine verbesserte Regelung zu schaffen, welche die Vorzüge größerer Schnelligkeit mit Stabilität und geringem Aufwand verknüpft.

Die erfindungsgemäße Lösung liegt in den Merkmalen der unabhängigen Ansprüche. Vorteilhafte Weiterbildungen sind Gegenstand der abhängigen Ansprüche.

Bei einem Windpark mit mindestens zwei Windenergieanlagen, die jeweils eine Betriebsteuerung aufweisen, sowie einem Parkmaster zur Steuerung der Windenergieanlagen einschließlich einer Leistungsregelung, an der ein Sollwertsignal für eine Windpark-Leistungsabgabe angelegt ist und die ein Sollsignal für die Leistungsabgabe der Windenergieanlage ausgibt, ist erfindungsgemäß vorgesehen, dass die Leistungsregelung einen Prädiktor aufweist, der ausgebildet ist zum Bestimmen korrigierter Sollwerte für die Windenergieanlage bei einer Änderung des Sollwertsignals für den Windpark, wobei die korrigierten Sollwerte auf den Leistungsregler aufgeschaltet sind.

Die Erfindung beruht auf der Erkenntnis, dass mittels eines Prädiktors es ermöglicht wird, nach einer Änderung des Sollwerts für den Windpark schnell eine neue Einstellung für einen vorzugsweise einheitlichen Sollwert für die Windenergieanlagen zu erhalten. Dank des Prädiktors kann der neue einzustellende Wert genauer getroffen werden, als dies bisher ermöglicht war. Dies macht nur noch wenig Nachjustierung erforderlich. Er ist damit bezüglich seines Einstellverhaltens robust und vermeidet insbesondere ein Unterschießen, d.h. das Einstellen eines zu niedrigen Sollwerts, mit der nicht gewünschten Folge einer mitunter erheblichen Ertragseinbuße. Verluste sind so dank des erfindungsgemäßen Prädiktors minimiert. Weiter erfordert der Prädiktor nur verhältnismäßig wenig Aufwand, da er es ermöglicht, einen zentralen Sollwert für die Windenergieanlage des Parks vorzusehen, und die nur aufwändig zu übertragenden einzelnen Sollwerte überflüssig macht. Die Erfindung ermöglicht es, auch mit einem verhältnismäßig einfach zu parametrierenden Prädiktor eine beträchtliche Verbesserung des Verhaltens des Windparks bei Sollwertsprüngen zu erreichen.

Ein überraschender Vorteil des erfindungsgemäßen Prädiktors liegt darin, dass er robust ist gegenüber unterschiedlichen Betriebszuständen der einzelnen Windenergieanlagen im Park. Dies ist insbesondere deshalb von großer praktischer Bedeutung, da gerade bei größeren Windparks häufig unterschiedliche Windgeschwindigkeiten in den verschiedenen Bereichen des Windparks auftreten. Die Windenergieanlagen sind damit in verschiedenen Betriebszuständen und können unterschiedlich viel Leistung produzieren. Es ist das Verdienst der Erfindung erkannt zu haben, dass auch unter solchen schwierigen Bedingungen der erfindungsgemäße Prädiktor zu praktisch sehr günstigen Ergebnissen führt. Dazu findet sich im Stand der Technik keinerlei Anleitung.

Nachfolgend seien zuerst einige verwendete Begriffe erläutert:

Unter einem Sollwert wird ein Vorgabewert für eine Wirkleistung verstanden, die von einer Windenergieanlage bzw. dem Windpark maximal abgegeben werden darf. Es ist der Natur einer Windenergieanlage geschuldet, dass sie diesen Sollwert bei schwachen Windverhältnissen nicht immer erreichen kann; weht andererseits aber genug Wind, so soll sie diesen Wert nicht überschreiten. Die Sollwertsignale können als absolute Leistungsvorgabe erfolgen (beispielsweise in kW oder MW), oder können auch als sog. normierte Größen vorgesehen sein (in der Regel bezogen auf die Nennleistung und damit dimensionslos wie eine Prozentangabe). Die Erfindung ermöglicht es, dass die Windenergieanlagen des Windparks den gleichen Sollwert erhalten. Absolut zwingend ist dies jedoch nicht, genauso gut können auch Gruppen von Windenergieanlagen gebildet werden innerhalb des Windparks, wobei jede Gruppe ihren eigenen Sollwert erhält.

Unter Aufschalten wird ein Einwirken auf den Leistungsregler verstanden, und zwar auf dessen Eingangs- und/oder Ausgangssignale (insbesondere mittels additiver oder multiplikativer Aufschaltung) und/oder den Leistungsregler selbst (insbesondere als Vorsteuerung, Nachsteuerung oder Störgrö-ßenaufschaltung).

Vorzugsweise weist der Prädiktor ein inverses Modell des Windparks auf. Besonders zweckmäßig ist, wenn es sich hierbei um ein vereinfachtes Modell handelt. Mit dem vereinfachten Modell wird Rechenzeit gespart und es bietet weiterhin den beträchtlichen Vorteil, dass es deutlich einfacher zu parametrieren ist als ein komplexes Modell. Die bereits erwähnte Robustheit des erfindungsgemäßen Prädiktors wirkt sich so auch positiv gegenüber Modellungenauigkeiten aus, so dass der Prädiktor bereits mit einem vereinfachten Modell gute Ergebnisse erzielt.

Mit Vorteil weist der Prädiktor einen Schätzer für die verfügbare Leistung der Windenergieanlage auf. Dem liegt die Erkenntnis zu Grunde, dass der stationäre Endwert für die Leistung einer Windenergieanlage in einem Sollwert-limitierten Betrieb das Minimum vom Windenergieanlagen-Sollwert einerseits und der von den Windbedingungen bestimmten momentanen Ist-Leistung der Windenergieanlage andererseits ist. Damit nutzt die Erfindung den Vorteil, dass die benötigten Werte sich genau messen lassen und/oder in der Betriebssteuerung in der Regel ohnehin bereits vorhanden sind. Ein hierauf basierender Schätzer liefert also einerseits gute Ergebnisse und verlangt wenig Aufwand.

Auf dieser Grundlage kann mittels eines Zusatzschätzers auf einfache Weise die erwartete Parkleistung bestimmt werden durch Aufsummierung der Leistungen der einzelnen Windenergieanlagen des Windparks. Vorzugsweise wird von dieser Summe noch ein Wert für die Leistungsverluste im Park abgezogen. Der Wert für diese Parkverluste kann bestimmt werden aus der Differenz der wie vorstehend gebildeten Summe der einzelnen Windenergieanlagen einerseits und andererseits der gemessenen Leistungsabgabe des Windparks insgesamt. Die Erfindung stellt so einen Zusammenhang her zwischen dem geschätzten stationären Endwert für die vom Park abgegebene Leistung $P_{stat\_Park}$ und dem Sollwert für die Windenergieanlage gemäß

$$P_{stat\_Park} = \left( \sum_i Min\left( P_{ist}(i), P_{s\_WEA} \right) \right) - P_V$$

wobei $P_V$ die vorstehend erläuterte Verlustleistung des Windparks ist, $P_{ist}(i)$ die momentane Ist-Leistung der Windenergieanlage i und $P_{s\_WEA}$ der einheitliche Sollwert für alle Anlagen (des Windparks bzw. der Gruppe innerhalb des Windparks).

Zweckmäßigerweise weist der Prädiktor ein inverses Parkmodell mit einem Leistungsdifferenzmodul und einem Zähler auf, wobei das Leistungsdifferenzmodul zur Bestimmung eines zu dem neuen Sollwert für den Windpark fehlenden Leistungswerts ausgebildet ist, und der Zähler mit einem Filter versehen ist, welches nur Windenergieanlagen mit einer positiven Leistungsreserve erfasst. Unter einem fehlenden Leistungswert wird hierbei die Leistungsdifferenz verstanden, die zwischen dem vorgesehenen Sollwert für die Leistung der Windenergieanlagen und ihrer verfügbaren Leistung besteht. Ist die verfügbare Leistung größer, so wird von einer "positiven Leistungsdifferenz" gesprochen. Das Leistungsdifferenzmodul ermittelt also, ob eine Windenergieanlage die von ihr erwartete Sollleistung abgeben kann (also Leistungsreserve hat) und wenn nicht, wie groß der Unterschuss ist (Betrag der Fehlleistung). Andererseits erfasst der Zähler die Anzahl der Windenergieanlagen, welche eine positive Leistungsdifferenz aufweisen, also Leistungsreserve haben. Hieraus wird ein Korrekturwert bestimmt, welcher dem Sollwert für die Windenergieanlage hinzugefügt wird. Vorzugsweise geschieht dies in der Weise, indem der von dem Leistungsdifferenzmodul bestimmte gesamte Unterschuss (Summe der Fehlleistung) auf die Anzahl der vom Zähler erfassten Windenergieanlage mit Leistungsreserve verteilt wird. Dies kann beispielsweise durch ein entsprechendes Distributionsglied erfolgen. Daraus wird dann ein Korrektursignal generiert, das zusätzlich an die Windenergieanlagen ausgegeben wird.

Die Erfindung macht sich hierbei zunutze, dass somit ein einheitlicher Sollwert an alle Windenergieanlagen ausgegeben werden kann. Es kann so dank des inversen Parkmodells der Sollwert für sämtliche Windenergieanlagen entsprechend dem Unterschuss erhöht werden, wobei diese Korrektur umso größer sein wird, je niedriger der Zählerstand für die Anzahl der Anlagen ist, die überhaupt zur Abgabe der gewünschten Leistung befähigt sind. Durch das Korrektursignal wird erfindungsgemäß also entsprechend leistungsmäßig nach oben "vorgehalten", und zwar umso mehr, je größer der Unterschuss und damit der Bedarf einerseits und je kleiner die Anzahl der zur Deckung dieser Fehlleistung verfügbaren Anlagen andererseits ist. Damit tragen die Windenergieanlagen auch bei einem einheitlichen Sollwert ganz individuell zur Leistungserhöhung bei, wobei die Windenergieanlagen mit Leistungsreserve eine planvoll bestimmte zusätzliche Korrekturleistung erbringen, um die Fehlleistung bei schwachen Windenergieanlagen auszugleichen. Die Nachteile der bekannten Systeme, dass sie langsam sind (wenn zuerst ein neuer Sollwert in Höhe des Vorgabewertes ausgegeben und dann in iterativer Änderung der Sollwert solange angepasst wird, bis der Istwert an den Vorgabewert angenähert ist) oder sehr aufwendig sind (wenn unterschiedliche Sollwerte an die einzelnen Windenergieanlagen ausgegeben werden müssen), werden so auf elegante und einfache Weise vermieden.

Es ist das Verdienst der Erfindung erkannt zu haben, dass dennoch die Steuerung der Windenergieanlagen im Windpark mittels desselben, korrigierten Sollwerts erfolgen kann, so dass es genügt, nur einen einziger Sollwert zu bestimmen und an die Windenergieanlagen auszugeben. Denn diejenigen Windenergieanlagen, die ohnehin nicht zur Erreichung des neuen Sollwerts befähigt sind (beispielsweise weil die Windverhältnisse bei ihnen ungünstig sind und sie damit Fehlleistung produzieren) werden von dem erhöhten Sollwert gar nicht beeinflusst, da sie die erhöhte Leistung ohnehin nicht erbringen können; insoweit geht bei diesen Windenergieanlagen die Korrektur ins Leere. Hingegen wird bei den Windenergieanlagen, die beispielsweise aufgrund günstigerer Windverhältnisse eine Leistungsreserve haben, durch das Korrektursignal die gewünschte Leistungserhöhung erreicht. Da die Anzahl dieser Windenergieanlagen durch den Zähler bestimmt wurde, und die Größe der Korrektur entsprechend dieser Anzahl bestimmt wurde (je größer die Anzahl der befähigten Anlagen, desto kleiner ist der jeweils von ihnen zu erbringende zusätzliche Beitrag) wird auf diese Weise eine gute Prädiktion für die neue Leistungsabgabe erreicht. Der neue Sollwert kann damit schnell und ohne große Abweichungen angesteuert werden.

Obgleich mit dieser verhältnismäßig einfachen Ausführungsform der Erfindung bereits recht gute Ergebnisse erreicht werden, sieht die Erfindung eine weitere Ausführungsform vor, die mit etwas höherem Aufwand noch bessere Ergebnisse erreicht. Dazu weist der Prädiktor mit seinem inversen Parkmodell einen Sortierer auf, der die Windenergieanlagen des Windparks in Abhängigkeit von ihrer aktuellen Leistungsabgabe sortiert und eine entsprechende Rangliste (mit den Windenergieanlagen und der Leistungsabgabe als Elemente) ausgibt. Auf diese Weise kann ermittelt werden, bis zu welcher Vorgabe für den Sollwert wie viele Windenergieanlagen mithalten können, also ausreichend Leistung bereitstellen können. Es kann somit feinfühliger auf die Anforderungen zusätzlicher Leistung reagiert werden. Vorzugsweise ist vorgesehen, dass der Prädiktor einen Approximator umfasst, der eine stückweise lineare Funktion bildet basierend auf der von dem Sortierer erstellten Rangliste, wobei die Elemente der Rangliste Stützstellen für die stückweise lineare Funktion sind. Durch lineare Interpolation ist so eine direkte Berechnung der vom Windpark insgesamt abgegebenen Leistung ermöglicht. Die lineare Interpolation, bietet ferner den Vorzug, dass sich die jeweiligen linearen Abschnitte leicht umkehren lassen, d.h. dass sich deren Umkehrfunktion sowohl einfach wie auch exakt bestimmen lässt. Zu diesem Zweck ist vorzugsweise ein Inversmodul vorgesehen, in welchem eine Umkehrfunktion der stückweise linearen Funktion implementiert ist. Damit kann auf einfache und direkte Weise zu jedem vorgegebenen Sollwert für die Parkleistung bestimmt werden, wie groß der Sollwert für die Windenergieanlagen sein muss und wie viele Windenergieanlagen in der Lage sein werden, diesen Leistungswert zu erbringen oder welche bereits aufgrund der herrschenden Verhältnisse (Windbedingung) an ihrer Leistungsgrenze sind.

Die Erfindung bezieht sich ferner auf ein entsprechendes Verfahren zum Betreiben eines Windparks mit mindestens zwei Windenergieanlagen, die jeweils eine Betriebssteuerung aufweisen, sowie einen Parkmaster mit einem Leistungsregler zur Steuerung der Windenergieanlagen, wobei an den Parkmaster ein Sollwertsignal für die Windpark-Leistungsabgabe angelegt wird, und der Parkmaster hieraus Sollsignale für die Leistungsabgabe der Windenergieanlage generiert und ausgibt, umfassend ein Vorausbestimmen des Sollsignals für die Leistungsabgabe der Windenergieanlage mittels eines Prädiktors, der zum Bestimmen korrigierter Sollwerte für die Windenergieanlagen bei einer Änderung des Sollwertsignals für den Windpark ausgebildet ist, und ein Aufschalten der korrigierten Sollwerte auf den Leistungsregler. Zur näheren Erläuterung wird auf vorstehende Beschreibung verwiesen.

Die Erfindung wird nachfolgend unter Bezugnahme auf vorteilhafte Ausführungsbeispiele näher erläutert. Es zeigen:

Fig. 1    eine Übersichtsdarstellung eines Windparks mit mehreren Windenergieanlagen und einem Parkmaster mit einem Prädiktor;

Fig. 2    eine schematische Darstellung des Parkmasters mit dem Prädiktor;

Fig. 3    ein Blockschaltbild zu einem ersten Ausführungsbeispiel des Prädiktors mit einem Parkmodell;

Fig. 4    ein Schaubild mit Leistungskurven für das erste Ausführungsbeispiel;

Fig. 5    ein Blockschaltbild zu einem Zusatzschätzer zur Bestimmung der vom Windpark erwarteten Leistungsabgabe;

Fig. 6    ein Blockschaltbild zu einem zweiten Ausführungsbeispiel des Prädiktors mit einem Parkmodell; und

Fig. 7    ein Schaubild für eine Leistungskurve gemäß dem zweiten Ausführungsbeispiel.

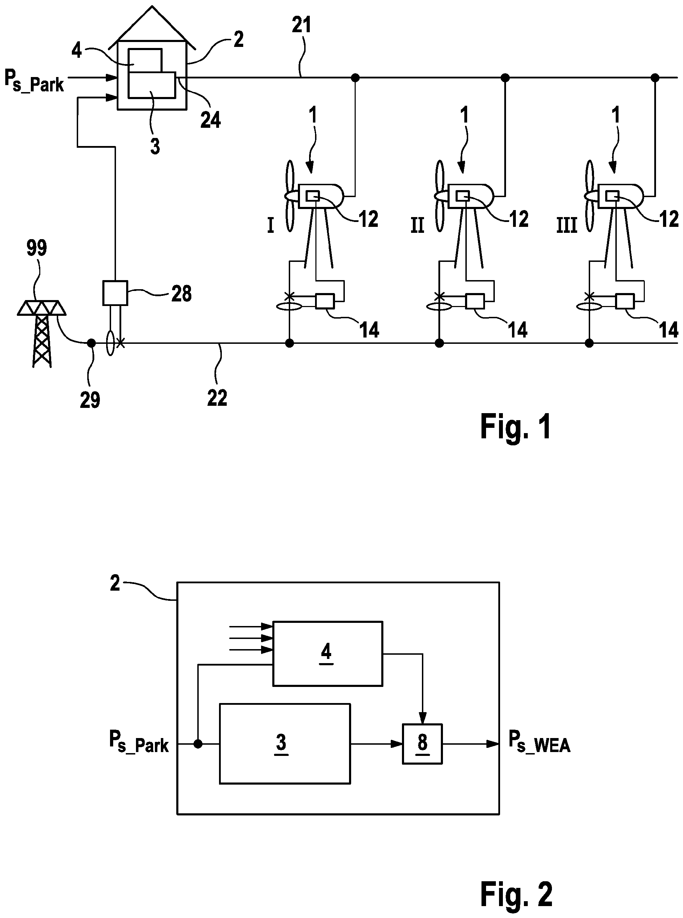

Die Erfindung sei am Beispiel eines Windparks erörtert, wie er beispielhaft in Figur 1 dargestellt ist. Der Windpark umfasst eine Mehrzahl von Windenergieanlagen 1, wobei im dargestellten Ausführungsbeispiel drei Windenergieanlagen vorgesehen sind. Sie sind gleichartig aufgebaut und zur Identifikation mit römischen Zahlen I, II bzw. III gekennzeichnet. Die Windenergieanlagen 1 weisen jeweils einen Generator (nicht dargestellt) und eine Betriebssteuerung 12 auf. Die mit dem Generator erzeugte elektrische Energie wird an ein parkinternes Sammelnetz 22 abgegeben, an das die Windenergieanlagen 1 angeschlossen sind. Das parkinterne Netz 22 ist über einen Anschlusspunkt 29 (auch als Point of Common Coupling bezeichnet, PCC) an ein Hochspannungsnetz 99 angeschlossen. Üblicherweise erfolgt dies über einen Hochspannungstransformator (nicht dargestellt). Weiter ist ein Windparkmaster 2 vorgesehen, welcher eine übergeordnete Regelung für die Windenergieanlagen 1 des Windparks ausübt. Der Windparkmaster 2 ist über ein gesondertes parkinternes Signalleitungsnetz 21 mit den Windenergieanlagen 1 verbunden, genauer gesagt mit den Betriebsteuerungen 12 der jeweiligen Windenergieanlagen 1.

An den Windenergieanlagen 1 sind Messaufnehmer 14 zur Bestimmung der von der jeweiligen Windenergieanlage 1 in das parkinterne Sammelnetz 22 abgegebenen Leistung angeordnet. Die so ermittelten Messergebnisse sind an die Steuerung 12 der jeweiligen Windenergieanlage und darüber an das parkinterne Signalnetz 21 angelegt. Ferner sind an dem Anschlusspunkt 29 weitere Messaufnehmer 28 vorgesehen, welche die insgesamt von dem Park abgegebene Leistung erfassen und als Signal an den Parkmaster 2 anlegen. Ferner ist an dem Parkmaster 2 ein Eingangssignal für einen Sollwert einer abzugebenden Leistung des Windparks $P_{s\_Park}$ angelegt. Es wird einem im Parkmaster 2 enthaltenen Leistungsregler 3 für den Windpark zugeführt. Der Parkmaster weist ferner einen Ausgangsanschluss 24 aus, über die er Sollwertvorgabesignale $P_{s\_WEA}$ über das parkinterne Datennetz 21 an die Windenergieanlagen 1 übermittelt.

Der Parkmaster 2 umfasst zu dem Leistungsregler 3 einen Prädiktor 4, der über ein Aufschaltelement 8 auf den Ausgang des Leistungsreglers 3 aufgeschaltet ist. Der Prädiktor 4 umfasst ferner ein inverses Parkmodell 5 sowie einen Schätzer 6.

Bei allen in der folgenden Erläuterung verwendeten Leistungswerten handelt es sich um normierte Größen, d. h. die Leistungen sind auf die Nennleistung normiert.

Der Prädiktor 4 ist dazu ausgebildet, für einen gegebenen Sollwert für die Parkleistung $P_{s\_Park}$ denjenigen normierten Sollwert für die Leistung der Windenergieanlagen $P_{s\_WEA}$ zu finden, dass sich die gewünschte Sollleistung des Parks als stationäre Parkleistung $P_{stat\_Park}$ einstellt. Dazu ist ein vereinfachtes inverses Parkmodell 5 vorgesehen. Es umfasst ein Leistungsdifferenzmodul 50, einen Zähler 56 sowie ein Filter 54. Am Eingang des Leistungsdifferenzmoduls 50 ist ein Differenzglied 51 vorgesehen, an dessen einen Eingang 52 der Sollwert des Windparks $P_{s\_Park}$ angelegt ist. An den negativen Eingang 53 ist die tatsächlich von dem Messaufnehmer 14 bestimmte Istleistung $P_{ist}$ der Windenergieanlage angelegt. Ergibt sich hierbei ein Wert über Null, so handelt es sich um Fehlleistung, d.h. die Sollleistung wird nicht durch die tatsächliche Leistungsabgabe gedeckt. Ist der Wert unter Null, so ist die Anlage hingegen zu einer ausreichenden Leistungsabgabe befähigt. Dies wird mittels des Filters 54 überprüft. Liegt der Wert über Null, so wird die so sich ergebende Fehlleistung mittels eines Summierglieds 55 des Leistungsdifferenzmoduls 50 über die einzelnen Windenergieanlagen 1 des Windparks hinweg aufaddiert. Liegt der Wert unter Null, so wird der Zähler 56 um 1 erhöht. Am Ende der Berechnung gibt das Leistungsdifferenzmodul 50 die sich insgesamt über die Windenergieanlage des Parks hinweg ergebende Fehlleistung aus, während der Zähler 56 die Anzahl derjenigen Windenergieanlagen ausgibt, die Mehrleistung abgeben können. In einem nachfolgenden Schritt wird mittels eines Divisionsglieds 57 die sich insgesamt ergebende Fehlleistung durch die vom Zähler 56 bestimmte Anzahl z der leistungsfähigen Anlagen geteilt und damit ein Korrekturleistungswert $P_{korr}$ berechnet. Dieser wird in einem nachfolgenden Schritt über ein als Summierglied ausgeführtes Aufschaltelement 8 zu dem ursprünglichen Sollwert für die Parkleistung $P_{s\_Park}$ hinzuaddiert. Es wird somit von dem inversen Parkmodell 5 die Sollwertvorgabe $P_{s\_WEA}$ modifiziert und am Ausgangsanschluss 24 des Parkmasters 2 über das parkinterne Signalnetz 21 an die einzelnen Windenergieanlagen 1 angelegt.

Es wird so erreicht, dass diejenigen Windenergieanlagen, welche grundsätzlich zur ausreichenden Leistungsabgabe befähigt sind, die von den nicht ausreichend befähigten Anlagen verursachte Fehlleistung abdecken, indem die Fehlleistung aufgeteilt wird auf die Anzahl der entsprechend befähigten Anlagen. Der Prädiktor 4 bestimmt, um wie viel dazu entsprechend der Sollwert für alle Windenergieanlagen erhöht werden muss.

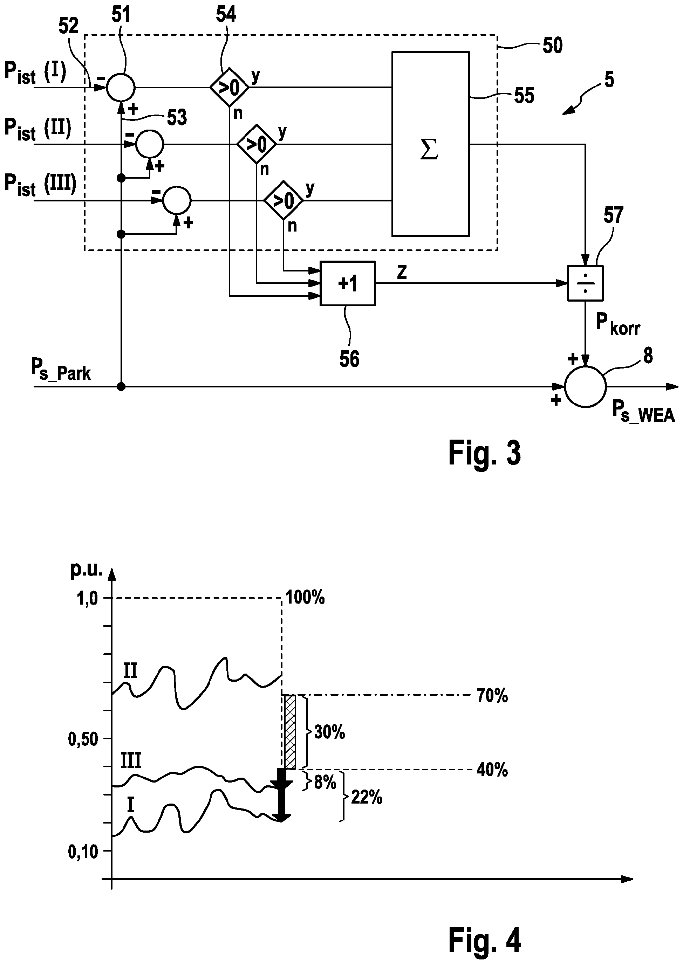

Dies wird in Figur 4 beispielhaft für drei Windenergieanlagen erläutert, und zwar anhand eines Sollwertsprungs (dargestellt mit gestrichelter Linie) von ursprünglich 100 % der Parkleistung auf 40 % der Parkleistung (entsprechend 1,0 auf 0,4 in normierter Darstellung). Die Windenergieanlage II gibt eine ausreichend große Leistung ab, während die beiden anderen Windenergieanlagen I, III keine ausreichende Leistung abgeben. Diese beiden Windenergieanlagen erzeugen also eine Fehlleistung in Bezug auf den neuen Sollwert (jeweils dargestellt durch die beiden nach unten weisenden fettgedruckten Pfeile). Die Fehlleistungen betragen 8 % bzw. 22 %, entsprechend 0,08 bzw. 0,22 in normierter Darstellung. Insgesamt ergibt sich also eine Fehlleistung von 30 % (entsprechend 0,30 normiert). Diese Fehlleistung wird aufgeteilt auf die Anzahl der Anlagen mit ausreichender Leistungsfähigkeit (im dargestellten Beispiel nur eine), und es ergibt sich so für alle Anlagen ein Erhöhungswert von 30 % (entsprechend 0,30 normiert), wie es in der Figur durch den nach oben weisenden kreuzschraffierten Balken dargestellt ist. Es werden als neuer Sollwert also nicht 0,40, sondern 0,40 + 0,30 = 0,70 an die Windenergieanlagen 1 übermittelt (dargestellt durch eine punktstrichlierte Linie), und zwar an sämtliche Windenergieanlagen 1. Für die beiden nicht befähigten Windenergieanlagen I, III ist die Erhöhung des Sollwerts ohne Belang, da sie ohnehin diesen Wert nicht erfüllen können. Für die zur Mehrleistung befähigte Windenergieanlage II ist dies jedoch relevant und sie stellt die Leistungsabgabe entsprechend auf den erhöhten Sollwert ein, womit sie die Fehlleistung der zwei anderen Anlagen kompensiert. Damit kann bei einem Sollwertsprung entsprechend vorgehalten werden, so dass sich der neue Wert zügig einstellt, ohne dass es zu großen Abweichungen kommt.

Bevor ein zweites Ausführungsbeispiel beschrieben wird, sei zuerst der Aufbau des Schätzers 6 erläutert. Der Schätzer 6 umfasst einen Minimumsbildner 60 mit mehreren Eingangsanschlüssen 61, 62 und einem Ausgangsanschluss 63. An dem Eingangsanschluss 61 ist ein Wert für die von der jeweiligen Windenergieanlage 1 verfügbare Leistung angelegt, wie von dem Messaufnehmer 14 bestimmt. An dem Eingangsanschluss 62 ist hingegen ein Wert für die normierte Sollleistung der Windenergieanlage angelegt. Aus diesen beiden Eingangswerten generiert der Minimumsbildner 60 ein Ausgangssignal, indem er das kleinere Signal auswählt und ausgibt. Hierbei verwendet der Schätzer 6 die momentane Ist-Leistung als Schätzung für die verfügbare Leistung, die jedoch begrenzt ist durch eine Vorgabe der maximalen Sollleistung. Dieser Wert wird am Anschluss 63 ausgegeben. Eine derartige Minimumsbildung wird für jede der Windenergieanlagen 1 durchgeführt und die jeweiligen Ergebnisse werden mittels einer Summiereinrichtung 65 aufaddiert. Von dem so gebildeten Summenwert wird in einer Nachfolgestufe mit einem Differenzglied 66 ein Wert für die Leistungsverluste im Park abgezogen. Dieser Leistungsverlust $P_V$ ist unabhängig von dem eingestellten Sollwert und ergibt sich als Differenz der Summe der Ist-Leistungen der Windenergieanlagen 1 und der am Anschlusspunkt 29 von dem Messaufnehmer 28 bestimmten Gesamtleistung des Windparks. Es sei angemerkt, dass in dem dargestellten Ausführungsbeispiel zur Vereinfachung der Minimumsbildner 60 von identischen normierten Sollwerten für die Windenergieanlagen 1 des Parks ausgeht.

Auf diese Weise kann ein geschätzter stationärer Endwert für die vom Windpark abgegebene Leistung erzeugt werden gemäß der Beziehung

$$P_{stat\_Park} = \left( \sum_i Min\left(P_{ist}(i), P_{S\_WEA}\right) \right) - P_V$$

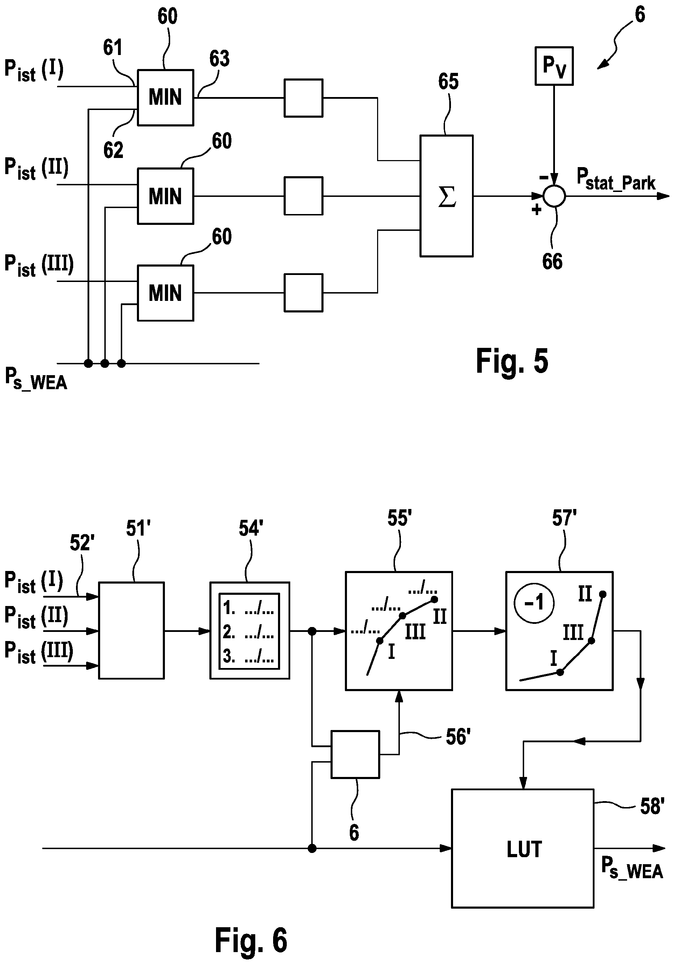

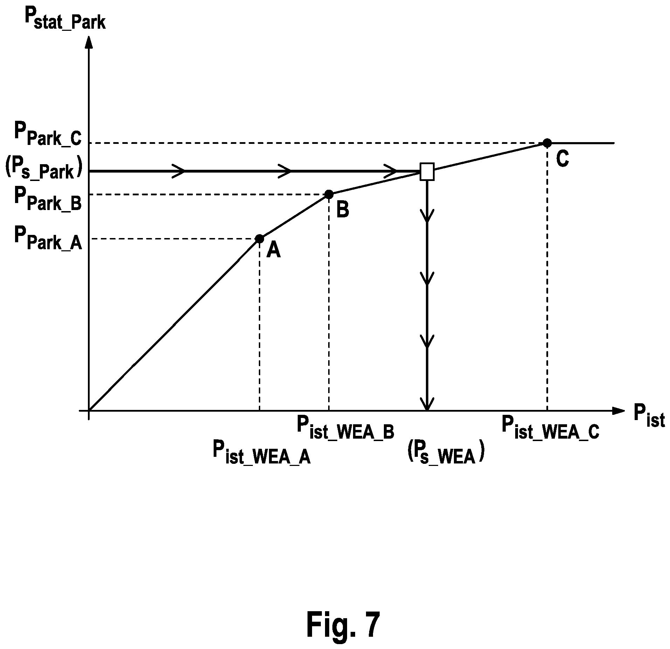

Ein zweites in Figur 6 dargestelltes Ausführungsbeispiel des Prädiktors 4 weist ein aufwendigeres inverses Modell auf. Es sind wie bei dem ersten Ausführungsbeispiel Signale für die von den Windenergieanlagen 1 tatsächlich abgegebene Leistung der $P_{ist}(i)$ an einem Eingang 52' angelegt. Anhand dieser Leistungssignale werden die Wind-ergieanlagen 1 mittels eines Sortierers 51' in aufsteigender Reihenfolge sortiert. Der Sortierer 51' generiert somit eine Rangliste 54'. Sie enthält als Angaben für die Windenergieanlage 1 jeweils ein Maß für die normierte tatsächliche Leistung, wobei die Rangliste 54' aufsteigend sortiert ist. Mittels eines Approximators 55' wird damit eine stückweise lineare Funktion für die Leistungsabgabe aller Windenergieanlagen 1 des Windparks gebildet. Hierbei dienen die Werte aus der Rangliste 54' als Stützstellen. So arbeiten in einem ersten Segment der stückweise linearen Funktion sämtliche Windenergieanlagen voll mit und es kann der Sollwert ausgehend von Null soweit gesteigert werden, wobei sich die Abgabeleistung des gesamten Windparks insgesamt erhöht solange, bis die erste Windenergieanlage gemäß der Rangliste 54' (also die leistungsschwächste) ihren maximalen Wert erreicht. Dies ist die erste Stützstelle (s. Punkt A in Fig. 7, hier erreicht Windenergieanlage I ihr Maximum). Ab diesem Wert nimmt diese Windenergieanlage (Windenergieanlage I) an weiteren Steigerungen des Sollwerts nicht mehr teil, da sie bereits die für sie bei den jeweiligen Windverhältnissen mögliche Maximalleistung abgibt. Damit beginnt ein zweites Segment der stückweise linearen Funktion, das dadurch ein wenig flacher als das erste Segment verläuft. Das somit begonnene zweite Segment setzt sich fort, bis die nächste Windenergieanlage gemäß der Rangliste 54' wiederum ihr Maximum erreicht (im dargestellten Ausführungsbeispiel ist das die Windenergieanlage III, am Punkt B in Fig. 7). Im nun folgenden dritten Segment nimmt auch diese Windenergieanlage nicht mehr an einer Steigerung des Sollwerts teil, da sie bereits ihr Maximum erreicht hat. Das dritte Segment wird dadurch noch etwas flacher. Es endet dort, wo die stärkste Windenergieanlage ihr Maximum erreicht (Windenergieanlage II, am Punkt C in Fig. 7). Bei weiterer Steigerung des Sollwerts für die Windenergieanlagen erhöht sich die vom Windpark abgegebene Leistung nicht mehr, da alle Windenergieanlagen bereits an ihrem Maximum betrieben werden. Es folgt somit ein horizontales Segment (ab Punkt C in Fig. 7) Eine entsprechende Darstellung für einen Windpark mit drei Windenergieanlagen ist in Fig. 7 gegeben, wobei auf der Abszisse der normierte Sollwert für die Windenergieanlagen $P_{S\_WEA}$ abgetragen ist und auf der Ordinate die vom Windpark insgesamt stationär abgegebene Leistung $P_{stat\_Park}$.

Mittels eines Inversmoduls 57' wird die von dem Approximator 55' erstellte stückweise lineare Funktion invertiert. Mathematisch erfolgt dies mittels einer im Inversmodul 57' implementierten, an sich bekannten Punktsteigungsformel. Die sich so ergebende Inversion ist in dem Block 57' schematisch dargestellt. Daraus wird eine Look-Up-Tabelle 58' generiert. Somit kann nun für an sich beliebige Werte für die Sollleistung des Windparks $P_{S\_Park}$ direkt ermittelt werden, welcher normierte Sollwert für die einzelnen Windenergieanlagen $P_{s\_WEA}$ damit korrespondiert (s. die fettgedruckten und mit Pfeilung versehene Linien in Fig. 7). Dieser Wert wird dann entsprechend aufgeschaltet und über den Anschluss 24 an die einzelnen Windenergieanlagen 1 ausgegeben.

Vorstehendes sei erläutert am Beispiel eines Sollwerts, der sich zwischen der zweiten und der dritten Stützstelle befindet. Es sei an dieser Stelle daran erinnert, dass alle Leistungsangaben normiert sind. Für die im Inversmodul 57' implementierte Funktion gilt:

$$P_{S\_WEA} = P_{i\_WEA\_B} + \frac{P_{i\_WEA\_C} - P_{i\_WEA\_B}}{P_{Park\_C} - P_{Park\_B}} * \left( P_{S\_Park} - P_{Park\_B} \right)$$

Hierbei stehen $P_{Park\_B}$ und $P_{Park\_C}$ für die jeweils vom Park insgesamt abgegebene Leistung an den Stützstellen B und C und die Werte $P_{i\_WEA\_B}$ bzw. $P_{i\_WEA\_C}$ für die jeweils von der zweiten bzw. dritten Windenergieanlage auf der Rangliste erreichten Leistungen.

**Patentansprüche**

1. Windpark mit mindestens zwei Windenergieanlagen (1), die jeweils eine Betriebssteuerung (12) aufweisen, sowie einen Parkmaster (2) mit einem Leistungsregler (3) zur Steuerung der Windenergieanlagen (1), an den ein Sollwertsignal für die Windpark-Leistungsabgabe ($P_{S\_Park}$) angelegt ist und der Sollsignale für die Leistungsabgabe der Windenergieanlage ($P_{S\_WEA}$) ausgibt,
**dadurch gekennzeichnet, dass**
die Leistungsregelung (3) einen Prädiktor (4) aufweist, der zum Bestimmen korrigierter Sollwerte für die Windenergieanlagen (1) bei einer Änderung des Sollwertsignals für den Windpark ausgebildet ist, wobei die korrigierten Sollwerte auf den Leistungsregler (3) aufgeschaltet sind.

2. Windpark nach Anspruch 1, **dadurch gekennzeichnet, dass** der Prädiktor (4) ein vorzugsweise vereinfachtes inverses Parkmodell (5) umfasst.

3. Windpark nach Anspruch 2, **dadurch gekennzeichnet, dass** der Prädiktor (4) einen Schätzer für die verfügbare Leistung der Windenergieanlage (1) umfasst, der vorzugsweise ausgebildet ist als ein Minimumsbildner (60) aus Ist-Leistung der Windenergieanlage und dem Sollwert der Windenergieanlage.

4. Windpark nach Anspruch 3, **dadurch gekennzeichnet, dass** weiter ein Zusatzschätzer (6) für die verfügbare Leistung des Windparks vorgesehen ist, der zur Summierung der von dem Schätzer (60) bestimmten Leistung der Windenergieanlagen (1) ausgebildet ist und vorzugsweise einen Schätzwert für eine abzuziehende Verlustleistung bestimmt.

5. Windpark nach einem der Ansprüche 2 bis 4, **dadurch gekennzeichnet, dass** der Prädiktor (4) ein Leistungsdifferenzmodul (50) und einen Zähler (56) aufweist, wobei das Leistungsdifferenzmodul (50) zur Bestimmung eines zu dem neuen Parksollwert fehlenden Leistungswerts ausgebildet ist, und der Zähler (56) mit einem Filter (54) versehen ist, welches nur Windenergieanlagen mit einer positiven Leistungsreserve erfasst.

6. Windpark nach Anspruch 5, **dadurch gekennzeichnet, dass** ein Distributormodul (57) vorgesehen ist, welches den vom Leistungsdifferenzmodul (50) bestimmten Leistungswert ausschließlich auf die Anzahl (z) der vom Zähler (56) erfassten Windenergieanlagen mit positiver Leistungsreserve verteilt.

7. Windpark nach Anspruch 5 oder 6, **dadurch gekennzeichnet, dass** das Leistungsdifferenzmodul (50) jeweils für eine der Windenergieanlagen (1) die Differenz von deren aktuellen Leistungsgrad zum Sollwert bestimmt und über die Windenergieanlagen (1) aufaddiert.

**8.** Windpark nach Anspruch 1 oder 2, **dadurch gekennzeichnet, dass** der Prädiktor (4) einen Sortierer (51') umfasst, der die Windenergieanlagen (1) nach ihrer aktuellen Leistungsabgabe sortiert und eine sortierte Liste ausgibt.

**9.** Windpark nach Anspruch 8, **dadurch gekennzeichnet, dass** der Prädiktor (4) weiter einen Approximator (54') umfasst, der eine stückweise lineare Funktion der vom Windpark abgegebenen Leistung mit der sortierten Liste als Stützstellen.

**10.** Windpark nach Anspruch 9, **dadurch gekennzeichnet, dass** der Prädiktor (4) weiter ein Inversmodul (57') umfasst, in welchem eine Umkehrfunktion der stückweisen linearen Funktion implementiert ist, vorzugsweise als Lookup-Table (58').

**11.** Windpark nach Anspruch 10, **dadurch gekennzeichnet, dass** an das Inversmodul (57') als Eingangssignal der neue Windparksollwert $(P_{S\_Park})$ angelegt ist und es als Ausgangssignal den Windenergieanlagen-Sollwert $(P_{S\_WEA})$ ausgibt.

**12.** Verfahren zum Betreiben eines Windparks mit mindestens zwei Windenergieanlagen (1), die jeweils eine Betriebssteuerung (12) aufweisen, sowie einen Parkmaster (2) mit einem Leistungsregler (3) zur Steuerung der Windenergieanlagen (1), wobei an den Parkmaster (2) ein Sollwertsignal für die Windpark-Leistungsabgabe $(P_{S\_Park})$ angelegt wird, und der Parkmaster (2) hieraus Sollsignale für die Leistungsabgabe der Windenergieanlage $(P_{S\_WEA})$ generiert und ausgibt,
**gekennzeichnet durch**
Vorausbestimmen des Sollsignals für die Leistungsabgabe der Windenergieanlage $(P_{S\_WEA})$ mittels eines Prädiktors (4), der zum Bestimmen korrigierter Sollwerte für die Windenergieanlagen (1) bei einer Änderung des Sollwertsignals für den Windpark ausgebildet ist, und Aufschalten der korrigierten Sollwerte auf den Leistungsregler (3).

**13.** Verfahren nach Anspruch 12, **dadurch gekennzeichnet, dass** ein nach den Ansprüchen 2 bis 11 weitergebildeter Prädiktor (4) verwendet wird.

**Claims**

**1.** Wind farm having at least two wind energy installations (1), each having an operational controller (12), and a farm master (2) having a power regulator (3) for controlling the wind energy installations (1), to which a desired value signal for the wind farm power output $(P_{S\_Park})$ is applied and which outputs desired signals for the power output of the wind energy installation $(P_{S\_WEA})$,
**characterized in that**
the power regulator (3) has a predictor (4) which is designed to determine corrected desired values for the wind energy installations (1) if the desired value signal for the wind farm changes, wherein the corrected desired values are applied to the power regulator (3).

**2.** Wind farm according to Claim 1, **characterized in that** the predictor (4) comprises a preferably simplified inverse farm model (5).

**3.** Wind farm according to Claim 2, **characterized in that** the predictor (4) comprises an estimator for the available power of the wind energy installation (1), which estimator is preferably in the form of a minimum former (60) from the actual power of the wind energy installation and the desired value of the wind energy installation.

**4.** Wind farm according to Claim 3, **characterized in that** an additional estimator (6) for the available power of the wind farm is also provided and is designed to sum the power of the wind energy installations (1), as determined by the estimator (60), and preferably determines an estimated value for a power loss to be deducted.

**5.** Wind farm according to one of Claims 2 to 4, **characterized in that** the predictor (4) has a power difference module (50) and a counter (56), wherein the power difference module (50) is designed to determine a power value missing from the new farm desired value, and the counter (56) is provided with a filter (54) which captures only wind energy installations with a positive power reserve.

**6.** Wind farm according to Claim 5, **characterized in that** a distributor module (57) is provided and distributes the power value determined by the power difference module (50) only to the number (z) of wind energy installations with a positive power reserve which are captured by the counter (56).

7. Wind farm according to Claim 5 or 6, **characterized in that** the power difference module (50) respectively determines, for one of the wind energy installations (1), the difference between its current power level and the desired value and adds said difference across the wind energy installations (1).

8. Wind farm according to Claim 1 or 2, **characterized in that** the predictor (4) comprises a sorter (51') which sorts the wind energy installations (1) according to their current power output and outputs a sorted list.

9. Wind farm according to Claim 8, **characterized in that** the predictor (4) also comprises an approximator (54') which a piecewise linear function of the power output by the wind farm with the sorted list as supporting points.

10. Wind farm according to Claim 9, **characterized in that** the predictor (4) also comprises an inverse module (57') in which an inverse function of the piecewise linear function is implemented, preferably as a lookup table (58').

11. Wind farm according to Claim 10, **characterized in that** the new wind farm desired value ($P_{S\_Park}$) is applied to the inverse module (57') as an input signal and the inverse module outputs the wind energy installation desired value ($P_{S\_WEA}$) as an output signal.

12. Method for operating a wind farm having at least two wind energy installations (1), each having an operational controller (12), and a farm master (2) having a power regulator (3) for controlling the wind energy installations (1), wherein a desired value signal for the wind farm power output ($P_{S\_Park}$) is applied to the farm master (2), and the farm master (2) generates desired signals for the power output of the wind energy installation ($P_{S\_WEA}$) therefrom and outputs said desired signals,
**characterized by**
prediction of the desired signal for the power output of the wind energy installation ($P_{S\_WEA}$) by means of a predictor (4) which is designed to determine corrected desired values for the wind energy installations (1) if the desired value signal for the wind farm changes, and application of the corrected desired values to the power regulator (3).

13. Method according to Claim 12, **characterized in that** a predictor (4) developed according to Claims 2 to 11 is used.

**Revendications**

1. Parc éolien, comprenant au moins deux aérogénérateurs (1) qui possèdent respectivement une commande de fonctionnement (12), ainsi qu'un maître de parc (2) comprenant un régulateur de puissance (3) destiné à commander les aérogénérateurs (1), auquel est appliqué un signal de valeur de consigne pour la puissance délivrée du parc éolien ($P_{S\_Park}$) et lequel délivre des signaux de consigne pour la puissance délivrée de l'aérogénérateur ($P_{S\_WEA}$), **caractérisé en ce que**
le régulateur de puissance (3) possède un prédicteur (4) qui est conçu pour déterminer des valeurs de consigne corrigées pour les aérogénérateurs (1) lors d'une modification du signal de consigne pour le parc éolien, les valeurs de consigne corrigées étant appliquées sur le régulateur de puissance (3).

2. Parc éolien selon la revendication 1, **caractérisé en ce que** le prédicteur (4) comprend un modèle de parc inverse (5) de préférence simplifié.

3. Parc éolien selon la revendication 2, **caractérisé en ce que** le prédicteur (4) comprend un estimateur pour la puissance disponible de l'aérogénérateur (1), lequel est de préférence réalisé sous la forme d'un calculateur de minimum (60) entre la puissance réelle de l'aérogénérateur et de la valeur de consigne de l'aérogénérateur.

4. Parc éolien selon la revendication 3, **caractérisé en ce qu'**un estimateur supplémentaire (6) pour la puissance disponible du parc éolien est en plus présent, lequel est conçu pour additionner la puissance des aérogénérateurs (1) déterminée par l'estimateur (60) et détermine de préférence une valeur estimée pour des pertes de puissance à déduire.

5. Parc éolien selon l'une des revendications 2 à 4, **caractérisé en ce que** le prédicteur (4) possède un module de différence de puissance (50) et un compteur (56), le module de différence de puissance (50) étant configuré pour déterminer une valeur de puissance manquante jusqu'à la nouvelle valeur de consigne de parc et le compteur (56) étant pourvu d'un filtre (54) qui ne détecte que les aérogénérateurs ayant une réserve de puissance positive.

6. Parc éolien selon la revendication 5, **caractérisé en ce qu'**un mode distributeur (57) est prévu, lequel distribue la valeur de puissance déterminée par le module de différence de puissance (50) exclusivement au nombre (z) d'aérogénérateurs ayant une réserve de puissance positive détectés par le compteur (56).

7. Parc éolien selon la revendication 5 ou 6, **caractérisé en ce que** le module de différence de puissance (50) détermine, respectivement pour l'un des aérogénérateurs (1), la différence entre son degré de puissance actuel et la valeur de consigne et l'additionne sur les aérogénérateurs (1).

8. Parc éolien selon la revendication 1 ou 2, **caractérisé en ce que** le prédicteur (4) comprend un trieur (51') qui trie les aérogénérateurs (1) en fonction de leur puissance délivrée actuelle et produit une liste triée.

9. Parc éolien selon la revendication 8, **caractérisé en ce que** le prédicteur (4) comprend en outre un approximateur (54') qui une fonction linéaire par tronçons de la puissance délivrée par le parc éolien avec la liste triée en tant que points de référence.

10. Parc éolien selon la revendication 9, **caractérisé en ce que** le prédicteur (4) comprend en outre un module inverse (57') dans lequel est mise en œuvre une fonction inverse de la fonction linéaire par tronçons, de préférence sous la forme d'une table de conversion (58').

11. Parc éolien selon la revendication 10, **caractérisé en ce que** le signal d'entrée appliqué au module inverse (57') est la nouvelle valeur de consigne du parc éolien ($P_{S\_Park}$) et le signal de sortie qu'il délivre est la valeur de consigne des aérogénérateurs ($P_{S\_WEA}$).

12. Procédé d'exploitation d'un parc éolien, comprenant au moins deux aérogénérateurs (1) qui possèdent respectivement une commande de fonctionnement (12), ainsi qu'un maître de parc (2) comprenant un régulateur de puissance (3) destiné à commander les aérogénérateurs (1), un signal de valeur de consigne pour la puissance délivrée du parc éolien ($P_{S\_Park}$) étant appliqué au maître de parc (2) et le maître de parc (2) générant et délivrant à partir de celui-ci des signaux de consigne pour la puissance délivrée de l'aérogénérateur ($P_{S\_WEA}$),
**caractérisé par**
détermination à l'avance du signal de consigne pour la puissance délivrée de l'aérogénérateur ($P_{S\_WEA}$) au moyen d'un prédicteur (4) qui est conçu pour déterminer des valeurs de consigne corrigées pour les aérogénérateurs (1) lors d'une modification du signal de consigne pour le parc éolien, et application des valeurs de consigne sur le régulateur de puissance (3).

13. Procédé selon la revendication 12, **caractérisé en ce qu'**un prédicteur (4) perfectionné selon les revendications 2 à 11 est utilisé.

$P_{s\_Park}$

4

2

21

24

3

1

1

1

I

12

II

12

III

12

99

28

14

14

14

29

22

# Fig. 1

2

4

3

8

$P_{s\_Park}$

$P_{s\_WEA}$

# Fig. 2

Fig. 3

Fig. 4

60

61                    63

P_ist (I) ──── MIN ────□

62

P_ist (II) ──── MIN ────□        Σ

                                 65

60

P_ist (III) ──── MIN ────□

P_s_WEA

$P_V$

$-$
○  $P_{stat\_Park}$
$+$

66

6

**Fig. 5**

52'    51'        54'          55'          57'

P_ist (I) ──→
P_ist (II) ──→   □      1. .../...     I  III  II     -1   II  III  I
P_ist (III) ──→         2. .../...
                        3. .../...

                              □
                                    56'

                         6

                                    LUT        58'
                                               P_s_WEA

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2028368 A2
- US 20120053751 A1